# EUROPÄISCHE PATENTSCHRIFT

(11) **EP 2 985 504 B1**
(45) Veröffentlichungstag und Bekanntmachung des Hinweises auf die Patenterteilung: **19.09.2018**
(21) Anmeldenummer: 15180958.9
(22) Anmeldetag: 13.08.2015
(51) Int. Cl.: F16L 13/14, F16L 33/207

(54) **FITTING MIT PRESSHÜLSE**
FITTING WITH CRIMPING SLEEVE
RACCORD AVEC DOUILLE DE SERTISSAGE

(30) Priorität: 14.08.2014 DE 102014216184
(43) Veröffentlichungstag der Anmeldung: 17.02.2016
(73) Patentinhaber: FRÄNKISCHE ROHRWERKE Gebr. Kirchner GmbH & Co. KG, 97486 Königsberg (DE)
(72) Erfinder: WELSCH, Thomas, 97437 Hassfurt (DE)
(74) Vertreter: Feller, Frank

(56) Entgegenhaltungen:
- EP-A1- 1 538 383
- EP-A1- 1 653 142
- EP-A2- 2 725 272
- AT-B- 402 095
- DE-A1- 2 824 453
- DE-U1- 29 622 009
- DE-U1- 29 907 585
- GB-A- 880 324

## Beschreibung

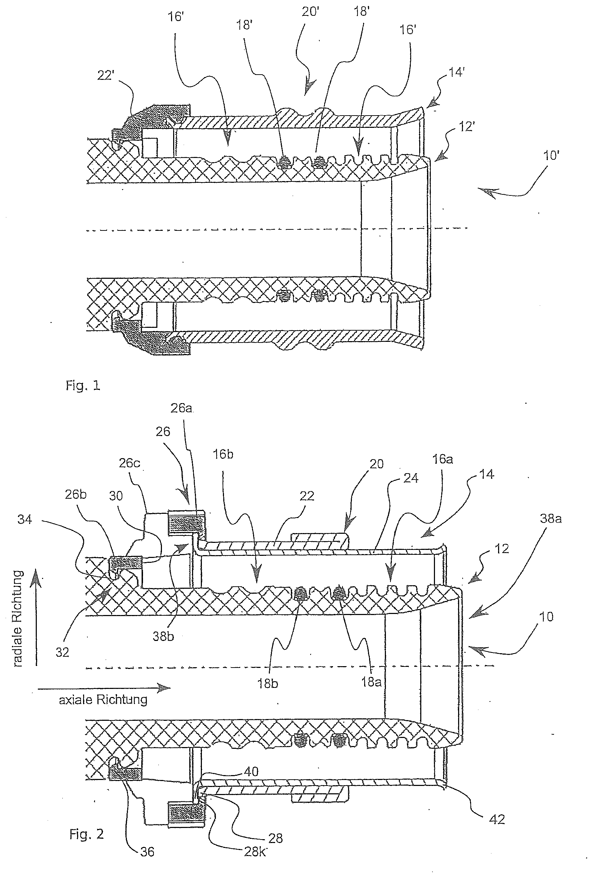

Die vorliegende Erfindung betrifft einen Fitting mit einer Presshülse zum Festlegen eines Rohres auf einer Stützhülse durch eine Pressverbindung.
Um Rohrelemente miteinander zu verbinden, werden, wo immer es die Gegebenheiten erlauben, sogenannte Fittinge verwendet, um möglichst schnell und unkompliziert eine Verbindung zwischen Rohrelementen herzustellen.
Bei der Verwendung von Kunststoffrohren oder Kunststoffverbundrohren (Rohren, welche neben einer Kunststoffschicht noch mindestens eine weitere Schicht, vorzugsweise eine Metallschicht (Metallverbundrohr), aufweisen) hat sich, wie z. B. in der Druckschrift EP 1 653 142 A1 gezeigt, die Verwendung von sogenannten Pressfittings bzw. Fittings 10' durchgesetzt (siehe Fig. 1), bei welchen das Rohr in ein aufschubseitiges Ende des Pressfittings 10' (bzw. in ein aufschubseitiges Ende der Presshülse 14') zwischen eine Stützhülse 12' und eine Presshülse 14' eingelegt wird und die Presshülse 14' mittels eines Presswerkzeugs zusammengedrückt (gepresst) wird, um das Rohr auf die Stützhülse 12' zu drücken und ferner das zusammengedrückte Rohr an einer Entformung aus dem deformierten Zustand zu hindern.
Um das Rohr an einem Abrutschen von der Presshülse 14' zu hindern, weist die Stützhülse 12' eine Vorsprungsstruktur 16' auf, wobei Zwischenräume der Vorsprungstruktur 16' dafür eingerichtet sind, während des Verpressens der Presshülse 14' und des Rohres Rohrmaterial aufzunehmen und somit zu einer Formschlussverbindung der Stützhülse 12' mit dem verpressten Rohr beizutragen.

Es hat sich jedoch gezeigt, dass eine Vorsprungsstruktur 16' häufig noch nicht ausreicht, um das Rohr dicht an dem Fitting 10' festzulegen. Aus diesem Grund wird auf die Stützhülse 12' häufig wenigstens ein O-Ring 18' aufgebracht, welcher dann beim Zusammenpressen des Rohrs eine dichtende Verbindung zwischen der Stützhülse 12' und dem Rohr sicherstellt.

Es ist somit besonders vorteilhaft, im Bereich von O-Ringen 18' einen gut definierten Verpressungsvorgang auszuführen, um die Dichtigkeit der Verbindung zwischen dem Fitting 10' bzw. der Stützhülse 12' und dem Rohr zu gewährleisten. Hierzu wird die Presshülse 14' mit einer Verdickungsstruktur 20' ausgebildet. Auf dem Markt befindet sich eine Vielzahl von Presswerkzeugen, welche unterschiedliche Presskonturen aufweisen (z. B. F-Kontur, U-Kontur, TH-Kontur, H-Kontur oder VP-Kontur) oder mit Pressbacken ausgerüstet werden können, welche die jeweiligen Konturen aufweisen. Die Verdickungsstruktur 20' ist mit einer zentralen Nut ausgebildet um einen Vorsprung einer Presskontur aufzunehmen, um das verwendete Presswerkzeug relativ zu dem Fitting 10' auszurichten. Ebenso kann die Verdickungsstruktur 20' selbst zwischen zwei Vorsprünge einer Presskontur aufgenommen werden, um das verwendete Presswerkzeug relativ zu dem Fitting 10' auszurichten. Die Verdickungsstruktur 20' kann während des Verpressens mit dem Presswerkzeug an ausgenommenen Abschnitten des Presswerkzeugs anliegen, so dass auch die ausgenommenen Abschnitte des Presswerkzeugs im verstärkten Maße zur Verpressung der Presshülse 14' beitragen. Insbesondere wird hierbei im Wesentlichen unabhängig von dem verwendeten Presswerkzeug sichergestellt, dass der mit der Verdickungsstruktur 20' versehene Bereich der Presshülse 14' durch das Presswerkzeug definiert verformt wird, sodass er zum Festlegen der Presshülse 14' beiträgt. Hiermit wird sichergestellt, dass ein Bereich oberhalb eines O-Rings 18' oder einer Vorsprungsstruktur 16' signifikant durch das Presswerkzeug verformt wird und zur Festlegung des Rohres und zur Dichtigkeit der Verbindung beiträgt, wobei diese Verformung im Wesentlichen unabhängig von dem Presswerkzeug sichergestellt wird.

Es ist jedoch kostenintensiv, Presshülsen 14' der oben beschriebenen Art herzustellen, da eine derartige Presshülse 14' eine hinreichend große Wandstärke aufweisen muss, um eine Deformation des Rohres aus dem verpressten Zustand heraus zu verhindern. Zusätzlich muss die Verdickungsstruktur 20' eine darüber hinaus erhöhte Materialstärke aufweisen, um einer Kontur eines Presswerkzeugs zu entsprechen. Diese Anforderungen führen dazu, dass eine derartige Presshülse 14' in einem großen und teuren Tiefziehwerkzeug hergestellt werden muss, um einen Rohling mit entsprechender Materialstärke bearbeiten zu können.

Ferner weist die Presshülse 14' über im Wesentlichen ihre gesamte axiale Erstreckung, abgesehen von der Verdickungsstruktur 20', eine im Wesentlichen einheitliche Wandstärke auf, welche ausreicht, um eine Verformung des Rohres aus dem verpressten Zustand hinaus zu verhindern, was wiederum den Materialeinsatz erhöht und somit die Materialkosten in die Höhe treibt.

Es ist bekannt, Presshülsen 14' über einen Kunststoffring 22' an der Stützhülse 12' festzulegen, wobei der Kunststoffring 22' einen Anschlag für das festzulegende Rohr darstellt. Umfasst die Stützhülse 12' Metall, so kann bei Metallverbundrohren durch den Kunststoffring 22' eine Isolierung zwischen der Metallschicht des Rohres und der Stützhülse 12' vorgesehen werden, um eine elektrochemische Korrosion der Metallschicht und/oder der Stützhülse 12' zu verhindern. Der Bereich in dem die Presshülse 14' an der Stützhülse 12' (beispielsweise über den Kunststoffring 22') befestigt ist, wird üblicherweise als der Bund der Stützhülse 12' bzw. des Fittings 10' bezeichnet, und das entsprechende Ende der Presshülse 14' bzw. von ihren Teilen wird als das bundseitige Ende bezeichnet.

Der Kunststoffring 22', welcher als ein Montagering für die Presshülse 14' dient, wird bei einigen Presswerkzeugen, beispielsweise bei Presswerkzeugen mit der TH-Kontur, beim Verpressen des Fittings mit verpresst oder zumindest als Führungshilfe für die Kontur des Presswerkzeugs (Presskontur) verwendet. Somit erlaubt der Kunststoffring 22' ein vereinfachtes und somit sichereres Ansetzen des Presswerkzeugs und im Falle eines zumindest teilweisen Verpressens, aufgrund der vorliegenden Formänderung, eine optisch einfache Überprüfung der Verpressung des Fittings.
Aus dem Dokument AT 402 095 B ist ein Fitting bekannt, umfassend eine Presshülse zum Festlegen eines Rohres auf einer Stützhülse durch eine Pressverbindung und einen Montagering zum Verbinden der Presshülse mit der Stützhülse. Gegenüber diesem Fitting unterscheidet sich der Gegenstand der vorliegenden Erfindung insbesondere dadurch, dass die Presshülse eine erste Teilhülse und eine zweite Teilhülse umfasst, wobei die erste Teilhülse auf der zweiten Teilhülse aufgenommen ist.
Ferner sei auf die Dokumente EP 2 725 272 A2, DE 296 22 009 U1, EP 1 538 383 A1, DE 299 07 585 U1 und DE 28 24 453 A1 verwiesen.
Die Aufgabe der vorliegenden Erfindung ist das Bereitstellen eines kostengünstigen Fittings zur Ausbildung einer verbesserten Pressverbindung mit einem Rohr.

Diese Aufgabe wird erfindungsgemäß durch einen Fitting nach Anspruch 1 gelöst, wobei der Fitting eine Presshülse, eine Stützhülse, einen auf der Stützhülse angebrachten O-Ring und einen von der Presshülse separaten Montagering für die Presshülse umfasst. BevorzugteAusführungsformen der Erfindung werden in den Unteransprüchen beschrieben.

Eine Presshülse des erfindungsgemäßen Fittings zum Festlegen eines Rohres auf einer Stützhülse durch eine Pressverbindung umfasst: eine erste Teilhülse, welche entlang der axialen Richtung der Presshülse eine Abschnittsverdickung der Presshülse ausbildet, und eine zweite Teilhülse, in welcher das Rohr aufzunehmen ist, wobei die erste Teilhülse auf der zweiten Teilhülse aufgenommen ist. Die erste Teilhülse ist separat von der zweiten Teilhülse ausgebildet. Durch das Vorsehen von zwei oder mehr Teilhülsen in der Presshülse können Teilhülsen mit einer geringeren Wandstärke verwendet werden, sodass bei der Ausbildung der Abschnittsverdickung an der ersten Teilhülse ein einfacheres und somit kostengünstigeres Werkzeug verwendet werden kann, wodurch eine Kostenreduzierung bei der Herstellung der Presshülse erreicht wird. Die Abschnittsverdickung der Presshülse kann sich über die gesamte erste Teilhülse erstrecken, insbesondere kann die Abschnittsverdickung der Presshülse durch das Material der ersten Teilhülse ausgebildet sein, insbesondere durch die Materialstärke der ersten Teilhülse ausgebildet sein. Insbesondere kann die Presshülse zwei überlappende konzentrische Hülsen unterschiedlicher axialer Länge aufweisen, wobei eine der konzentrischen Hülsen eine Ausbildung der ersten Teilhülse sein kann und die andere der konzentrischen Hülsen eine Ausbildung der zweiten Teilhülse sein kann. Die erste und zweite Teilhülse, insbesondere als zwei überlappende konzentrische Hülsen ausgebildet, können derart angeordnet sein, dass sie an einem ihrer Enden im Wesentlichen bündig angeordnet sind. Hierunter soll auch insbesondere eine Anordnung verstanden werden, bei welcher eine der Teilhülsen an dem Ende, an welchem die beiden Teilhülsen im Wesentlichen bündig angeordnet sind, einen Falz beziehungsweise eine Auskragung aufweist, welche eine weitere Bewegung der anderen Teilhülse zumindest in einer Richtung unterbindet. Vorzugsweise sind die erste und zweite Teilhülse am bundseitigen Ende der Presshülse im Wesentlichen bündig angeordnet. Es kann daran gedacht werden, dass die Abschnittsverdickung sich vorzugsweise im Wesentlichen über die gesamte erste Teilhülse erstreckt. Die Abschnittsverdickung kann sich über mehr als 10% der axialen Erstreckung der Presshülse, vorzugsweise über mehr als 30% der axialen Erstreckung der Presshülse, höchst bevorzugt über mehr als 50% der axialen Erstreckung der Presshülse erstrecken. Eine Erstreckung der Abschnittsverdickung über mehr als 10% der axialen Erstreckung der Presshülse erlaubt mit besonders geringem Kostenaufwand ein Rohr an einer Stützhülse festzulegen. Eine Erstreckung der Abschnittsverdickung über mehr als 30% der axialen Erstreckung der Presshülse erlaubt über einen signifikanten Bereich der Presshülse eine Deformation der Presshülse aus dem verpressten Zustand heraus zu unterbinden. Erstreckt sich die Abschnittsverdickung über mehr als 50% der axialen Erstreckung der Presshülse, so kann eine Deformation der Presshülse aus dem verpressten Zustand heraus im Bereich mehrerer funktioneller Abschnitte der Stützhülse verhindert werden. Vorzugsweise ist die erste Teilhülse und/oder die zweite Teilhülse aus einem Metall hergestellt.

In einer besonders bevorzugten Ausführungsform kann die Abschnittsverdickung ein axialer Teilabschnitt der ersten Teilhülse sein, welcher eine höhere Gesamtmaterialstärke aufweist, als die erste Teilhülse außerhalb der Abschnittsverdickung. Unter einer Gesamtmaterialstärke kann der Abstand in Radialrichtung von der Innenseite zu der Außenseite der ersten Teilhülse (bzw. einer der Teilhülsen oder der Presshülse) verstanden werden, insbesondere können zur Gesamtmaterialstärke auch Schichten, Hohlräume, Materialverwerfungen, -rollungen oder -faltungen beitragen.

Vorzugsweise ist die Abschnittsverdickung jeweils in einem Abstand von axialen Enden der Presshülse angeordnet. In diesem Fall kann die Abschnittsverdickung sicherstellen, dass eine Verpressung in einem zentralen Bereich der Presshülse sichergestellt wird, wobei dieser zentrale Bereich der Presshülse in einem Fitting oberhalb von mindestens einer Rippe und/oder mindestens einer Zacke und oder mindestens einer Nut und/oder mindesten seiner Dichtung, vorzugsweise durch ein Festlegen der Presshülse an einer vorbestimmten Position gegenüber der Stützhülse, angeordnet sein kann.

Vorzugsweise weist die Abschnittsverdickung eine Schichtstruktur auf, insbesondere eine Materialfaltung und/oder eine Materialaufrollung, sodass kostengünstige Verfahrensschritte beim Herstellen der Presshülse wie Bördeln, Falzen, Umschlagen oder Abknicken verwendet werden können. Es ist möglich, die erste Teilhülse einstückig auszubilden, wodurch im Herstellungsverfahren eine einzelne Materialart für die erste Teilhülse verwendet werden kann und der Herstellungsvorgang sich einfach somit kostengünstig gestaltet.

Vorzugsweise ist mindestens ein Abschnitt der Abschnittsverdickung zusammenhängend mit dem Material der ersten Teilhülse außerhalb der Abschnittsverdickung ausgebildet. In einer derartigen Anordnung kann mindestens ein Materialabschnitt, beispielsweise ein Materialring, welcher Bestandteil der Abschnittsverdickung sein kann, mittels eines Falzes an der ersten Teilhülse angebracht bzw. festgelegt werden. Das Material der ersten Teilhülse kann nicht nur den Materialabschnitt festlegen, sondern kann auch ein Bestandteil der Abschnittsverdickung, vorzugsweise zumindest ein Teil einer äußeren Schicht der Abschnittsverdickung sein. Ebenso ist es möglich, die gesamte Abschnittsverdickung zusammenhängend mit dem Material der ersten Teilhülse außerhalb der Abschnittsverdickung auszubilden, wodurch die Abschnittsverdickung besonders einfach durch ein Umklappen, Falten oder Aufrollen von Material der ersten Teilhülse ausgebildet sein kann.

Die Abschnittsverdickung kann an einem ersten axialen Ende der ersten Teilhülse ausgebildet sein. Hierdurch ist es möglich, die erste Teilhülse nur bis zu der Abschnittsverdickung und nicht über die gesamte Presshülse auszubilden, wodurch Material für die erste Teilhülse eingespart wird.

In einer bevorzugten Ausführungsform überlagern sich die erste Teilhülse und die zweite Teilhülse zumindest abschnittsweise außerhalb des Bereichs der Abschnittsverdickung. Dieser Überlagerungsabschnitt kann eine größere Materialstärke als die einzelnen Teilhülsen separat aufweisen, und erlaubt ein Erreichen einer hinreichend starken Materialstärke der Presshülse, um nach einem Verpressen eine Deformation des Rohrs aus dem verpressten Zustand heraus zu verhindern, ohne dass Teilhülsen verwendet werden, welche selbst eine Bearbeitung erschwerende Materialstärke aufweisen.

Vorzugsweise weist die erste Teilhülse an einem zweiten axialen Ende eine Änderung Ihrer Radialausdehnung auf, beispielsweise mindestens einen Vorsprung und/oder, mindestens eine Ausnehmung und/oder mindestens eine nach innen oder außen (bezüglich der Radialrichtung der ersten Teilhülse) weisende, vorzugsweise umlaufende, Auskragung, um die Presshülse an dem von der Presshülse separaten Montagering zu befestigen, oder in einer nicht erfindungsgemäßen Ausführung an einem von der Presshülse separaten Halteelement eines Fittings zu befestigen. Hierdurch kann die Presshülse unverlierbar an einem Fitting angebracht werden.

Vorteilhafterweise ist die Abschnittsverdickung dafür eingerichtet, zumindest abschnittsweise der Kontur einer Pressbacke des Presswerkzeug zu entsprechen. In diesem Fall kann ein Monteur insbesondere unter Verwendung von bekannten Pressbacken die Presshülse kontrolliert verpressen.

Es ist möglich, dass die erste Teilhülse eine zweite Abschnittsverdickung aufweist, wobei in einem Bereich der zweiten Abschnittsverdickung die erste Teilhülse die zweite Teilhülse überlagert. Hierdurch kann die erste Teilhülse an eine komplexe Kontur einer Pressbacke angepasst werden, wobei die bezüglich des Innendurchmessers der Stützhülse erreichte Materialstärke (d. h. Gemessen von der Innenseite der Stützhülse in Radialrichtung) als eine Summe der ersten und zweiten Teilhülse erreicht wird.

Es kann daran gedacht werden, die erste Teilhülse und die zweite Teilhülse relativ zueinander festzulegen. Dadurch erfordert das Anbringen jeweils der Presshülse an einem Fitting nicht das separate Anbringen der ersten und zweiten Teilhülse, wodurch der Arbeitsaufwand bei der Montage der Presshülse reduziert wird.

Eine Materialstärke der ersten Teilhülse kann größer als eine Materialstärke der zweiten Teilhülse sein. Somit kann die zweite Teilhülse als eine Führungshilfe für das Presswerkzeug dienen, ohne signifikante Materialkosten zu verursachen, während die erste Teilhülse aufgrund ihrer Materialstärke für eine dichte Festlegung des Rohres an der Stützhülse einen wesentlichen Beitrag liefert.

Eine axiale Ausdehnung der ersten Teilhülse kann kleiner als eine axiale Ausdehnung der zweiten Teilhülse sein. Der Erfinder hat überraschend festgestellt, dass für die sichere und dichte Festlegung des Rohres an der Stützhülse die erste Teilhülse und die zweite Teilhülse sich nicht über ihre die gesamte axiale Ausdehnung überlagern müssen, sodass Material der ersten Teilhülse eingespart werden kann. Die axial größere Ausdehnung der zweiten Teilhülse kann als eine optische Verlängerung der ersten Teilhülse in axialer Richtung dienen, um das Ansetzen eines Presswerkzeugs zu erleichtern.

Insbesondere ist es möglich, dass die erste Teilhülse der Presshülse Kunststoff enthalten kann, sie kann vorzugsweise aus Kunststoff ausgebildet sein. Die Verwendung von Kunststoff erlaubt über zuverlässige Verfahren, wie Spritzguss, die erste Teilhülse kostengünstig an der zweiten Teilhülse anzubringen.

Die erste Teilhülse der Presshülse kann mindestens eine abgestumpfte Kantenstruktur aufweisen. Dies verhindert beim Verpressen ein Verkanten der ersten Teilhülse an einer Pressbacke eines Presswerkzeugs und erlaubt somit ein störungsfreies Arbeiten.

Es wird daran gedacht, eine Festlegung der ersten Teilhülse an der zweiten Teilhülse dadurch zu bewerkstelligen, dass die erste Teilhülse an der zweiten Teilhülse angespritzt ist, und vorzugsweise angespritztes Material der ersten Teilhülse vorzugsweise in eine Vertiefung der zweiten Teilhülse eingreift. Hierdurch kann die Festlegung der ersten Teilhülse an der zweiten Teilhülse kostengünstig ohne hohen Aufwand bewerkstelligt werden.

Die erste Teilhülse der Presshülse kann eine Sollbruchstelle aufweisen, wodurch ein kostengünstiges Mittel zur Indikation einer Verpressung bereitgestellt wird.

Ein erfindungsgemäßer Fitting kann umfassen: eine oben beschriebene Presshülse und eine Stützhülse, wobei die Presshülse gegenüber der Stützhülse eine vorbestimmte Position einnimmt. Die vorteilhaften Effekte des Fittings ergeben sich insbesondere durch die vorteilhaften Effekte der Presshülse, wobei dadurch, dass die Presshülse gegenüber der Stützhülse eine vorbestimmte Position einnimmt, zusätzlich die Ausgestaltung der Presshülse an eine Rippen- und/oder eine Zacken- und/oder eine Nutstruktur und/oder Dichtungen auf der Stützhülse angepasst sein kann, was die Festigkeit und die Dichtigkeit der Verbindung des Rohres mit dem Fitting erhöht.

Die Stützhülse ist vorzugsweise innerhalb der Presshülse in dem Fitting angeordnet. In einer bevorzugten Ausführungsform des Fittings ist die Stützhülse koaxial mit der Presshülse angeordnet. Ferner kann zwischen der Stützhülse und der Presshülse ein Ringspalt vorliegen, in welchen das festzulegende Rohr eingeführt werden kann.

Ein derartiger Fitting kann ferner einen an der Stützhülse angebrachten O-Ring umfassen, wobei der Bereich der Abschnittsverdickung den O-Ring überspannt. Anstelle des O-Rings kann generell eine Dichtung, beispielsweise eine angespritzte Dichtung, an der Stützhülse des Fittings angebracht sein. Hierbei kann bei der Verpressung der Presshülse eine besonders sichere und besonders gut dichtende Verbindung zwischen der Stützhülse und dem Rohr hergestellt werden.

Vorteilhafterweise umfasst der Fitting ferner eine an der Stützhülse vorgesehene Struktur, innerhalb welcher sich die radiale Ausdehnung der Stützhülse ändert, wobei die Struktur durch einen Bereich der Abschnittsverdickung überspannt wird, oder wobei die Struktur von einem Teilbereich der Presshülse außerhalb des Bereichs der Abschnittsverdickung überspannt wird, wobei in dem Teilbereich die erste Teilhülse die zweite Teilhülse zumindest abschnittsweise überlagert. Die an der Stützhülse vorgesehene Struktur kann beispielsweise mindestens eine Rippe oder mindestens eine Nut oder eine Kombination von mindestens einer Rippe und mindestens einer Nut umfassen. Die mindestens eine Rippe, mindestens eine Zacke oder mindestens eine Nut können um die Stützhülse umlaufend ausgebildet sein. Wird die Struktur durch einen Bereich der Abschnittsverdickung überspannt, so kann beim Verpressen der Presshülse eine besonders sichere Formschlussverbindung zwischen dem Rohr und der Struktur der Stützhülse erzeugt werden. Wird die Struktur hingegen von einem Teilbereich der Presshülse außerhalb des Bereichs der Abschnittsverdickung überspannt, indem die erste Teilhülse die zweite Teilhülse zumindest abschnittsweise überlagert, so wird aufgrund der durch die Überlagerung der Teilhülsen verstärkten Anordnung in der Presshülse eine Verformung des verpressten Rohres aus dem verpressten Zustand heraus in besonders sicherer Art und Weise unterbunden, wodurch ein Lösen des Rohres aus der Verpressung in der Struktur besonders sicher unterbunden wird.

Die Erfindung wird anhand von erläuternden Ausführungsformen im Folgenden unter Zuhilfenahme von Figuren beschrieben. Es zeigen:
Fig. 1: Eine schematische Querschnittsansicht einer Presshülse des Standes der Technik an einem Fitting;
Fig. 2: Eine schematische Querschnittsansicht eines Fittings mit einer Stützhülse und einer Presshülse gemäß einer ersten Ausführungsform der vorliegenden Erfindung;
Fig. 3: Eine vergrößerte schematische Querschnittsansicht der Presshülse des Fittings der ersten Ausführungsform der vorliegenden Erfindung;
Fig. 4: Einen Ausschnitt einer schematischen Querschnittsansicht eines Fittings mit einer Stützhülse und einer Presshülse gemäß einer zweiten Ausführungsform der vorliegenden Erfindung;
Fig. 5: Einen Ausschnitt einer schematischen Querschnittsansicht eines Fittings einer dritten Ausführungsform der vorliegenden Erfindung;
Fig. 6a: eine schematische Querschnittsansicht einer Presshülse eines Fittings einer vierten Ausführungsform der vorliegenden Erfindung;
Fig. 6b: eine schematische Ansicht der Presshülse aus Figur 6a;
Fig. 7a: eine schematische Aufsicht auf einen Abschnitt einer ersten alternativen Ausführungsform einer ersten Teilhülse mit einer Sollbruchstelle; und
Fig. 7b: eine schematische Seitenansicht auf einen Abschnitt einer weiteren alternativen Ausführungsform einer ersten Teilhülse mit einer Sollbruchstelle.

### Beschreibung der Ausführungsformen

Fig. 2 zeigt einen Fitting 10 einer ersten Ausführungsform der vorliegenden Erfindung mit einer Stützhülse 12 und einer Presshülse 14. Die Stützhülse 12 weist eine aufschubseitige Vorsprungsstruktur 16a und eine bundseitige Vorsprungsstruktur 16b auf, welche jeweils Rippen und/oder Zacken und/oder Nuten aufweisen können. Die Stützhülse 12 weist einen aufschubseitigen O-Ring 18a und einen bundseitigen O-Ring 18b auf, welche vorzugsweise jeweils in einer Nut aufgenommen sind. Radial auswärts von den O-Ringen 18a, 18b aus betrachtet weist die Stützhülse 14 eine Abschnittsverdickung 20 auf. Die Abschnittsverdickung 20 ist Teil einer ersten Teilhülse 22, welche eine zweite Teilhülse 24 überlagert bzw. auf der zweiten Teilhülse 24 aufgenommen ist. Vorzugsweise ist die erste Teilhülse 22 und/oder die zweite Teilhülse 24 aus einem Metall hergestellt. Die Presshülse 14 kann zusammen mit einem Kunststoffring 26 vorgesehen sein. Hierzu weist die erste Teilhülse 22 eine Ausbuchtung 28 auf, welche in eine entsprechende Einbuchtung des Kunststoffrings 26 einrasten kann. Es kann jedoch auch daran gedacht sein, dass der Kunststoffring 26 eine Ausbuchtung und die erste Teilhülse 22 eine Einbuchtung aufweist. Der Kunststoffring 26 weist vorzugsweise einen Anschlag 30 auf, welcher verhindert, dass das festzulegende Rohr an seinem Stirnende mit dem Material der Stützhülse 12 in Kontakt gerät. Der Kunststoffring 26 ist vorzugsweise an einem Halteelement 32 der Stützhülse 12 befestigt. Das Halteelement 32 kann durch eine Rastvorrichtung realisiert sein, wobei bevorzugterweise das Halteelement 32 eine Nut 34 und der Kunststoffring 26 eine Auskragung 36 aufweist. Es kann jedoch auch daran gedacht werden, in dem Kunststoffring 26 eine Nut vorzusehen und an dem Halteelement 32 eine Auskragung vorzusehen.

In einer nicht erfindungsgemäßen Ausführung kann ferner daran gedacht werden, die Presshülse 14 direkt an dem Halteelement 32 anzubringen. Dies kann insbesondere bei Stützhülsen aus nicht leitendem Material, beispielsweise aus einem Kunststoff, vorgesehen sein, da in diesem Fall keine Isolierung des Stirnendes des festzulegenden Rohres von dem Material der Stützhülse notwendig ist. Dies kann beispielsweise dadurch realisiert werden, dass die Stützhülse 14, insbesondere die zweite Teilhülse 24, eine bezüglich der Radialrichtung der Stützhülse inwärts gewandte Auskragung aufweist, welche dafür eingerichtet ist, in eine Nut der Stützhülse 12 einzurasten (diese Alternative ist in den Zeichnungen nicht gezeigt).

Die zweite Teilhülse 24 kann an ihrem bundseitigen Ende 38b eine Auskragung 40 aufweisen, um ein Heruntergleiten der ersten Teilhülse in Richtung des bundseitigen Endes 38b zu verhindern und vorteilhafterweise unterstützt diese Auskragung 40 die Befestigung der Presshülse 14 an dem Kunststoffring 26. Die zweite Teilhülse 24 weist an ihrem aufschubseitigen Ende 38a vorzugsweise eine Erweiterung 42 auf, welche ein Heruntergleiten der ersten Teilhülse 22 von der zweiten Teilhülse 24 in Richtung des aufschubseitigen Endes 38a verhindert und welche ferner als eine Einführhilfe für das deformierbare Rohr dienen kann. Vorzugsweise ist die erste Teilhülse an der zweiten Teilhülse festgelegt. Vorzugsweise geschieht diese Festlegung über eine bezüglich der Radialrichtung nach innen weisende Vertiefung 44o in der ersten Teilhülse 22, welche in eine entsprechende Vertiefung 44u in der zweiten Teilhülse 24 hineinragt. Es kann jedoch auch daran gedacht sein, dass bezüglich einer Radialrichtung die zweite Teilhülse 24 einen nicht gezeigten Buckel aufweist, welcher in einen entsprechenden nicht gezeigten Buckel in der ersten Teilhülse 22 eingreift. Unter einem Buckel wird in dieser Anmeldung eine Struktur verstanden, welche, im Gegensatz zu den Vertiefungen 44o, 44u, relativ zu ihrer Umgebung in Radialrichtung aus ihrer Umgebung hervorragt. Vorzugsweise weisen die Vertiefungen 44o, 44u beziehungsweise die nicht gezeigten Buckel ein Durchgangsloch auf, wodurch einerseits ein Monteur über eine Sichtprüfung feststellen kann, ob das deformierbare Rohr tief genug in den Fitting 10 eingeführt worden ist und welche andererseits den Austritt einer Flüssigkeit bei einer Leckage an dem Fitting 10 erleichtert.

Es besteht die Möglichkeit, dass die erste Teilhülse 22 eine axiale Erstreckung L1 aufweist, welche in etwa halb so lang ist wie die Erstreckung L2 der zweiten Teilhülse 24. Die Materialstärke der zweiten Teilhülse 24 liegt vorzugsweise in einem Bereich von 50% bis 80% der Materialstärke der ersten Teilhülse 22. Die Abschnittsverdickung 20 weist vorzugsweise eine Schichtstruktur auf, welche eine Oberschicht 46 und eine Unterschicht 48 umfasst.

Um ein Rohr mit einem Außendurchmesser von 16 mm auf einer Stützhülse festzulegen, weisen die erste 22 und zweite 24 Teilhülsen vorzugsweise folgende Maße auf: Die zweite Teilhülse 24 kann einen Außendurchmesser von 16,8 mm und/oder einen Innendurchmesser von 16,2 mm aufweisen. Die Materialstärke der zweiten Teilhülse 24 kann 0,3 mm betragen und/oder ihre Länge L2 kann 19 mm betragen.

Die erste Teilhülse 22 kann abschnittsweise einen Außendurchmesser von 18 mm und/oder einen Innendurchmesser 17,4 mm aufweisen. Die Abschnittsverdickung 20 kann einen Außendurchmesser von 19,2 mm aufweisen und/oder eine Gesamtmaterialstärke von 1,2 mm aufweisen. Die Materialstärke der ersten Teilhülse 22 kann 0,6 mm betragen und/oder ihre Länge L1 kann 10,5 mm betragen. Die Gesamtmaterialstärke der Presshülse 14 kann, aufgrund Beispielsweise eines Spaltes zwischen der Oberschicht 46 und der Unterschicht 48, größer als die Summe der Materialstärken der Oberschicht 46, der Unterschicht 48 und der zweiten Teilhülse 24 sein.

Es ist zu beachten, dass bei den Angaben der Innen- und/oder Außendurchmessern lokale Vertiefungen 44o, 44u oder Buckel nicht berücksichtigt werden müssen.

Ein zwischen dem eingeführtem 16 mm - Rohr und der zweiten Teilhülse 24 vorliegender Spalt von etwa 0,1 mm auf jeder Seite erlaubt, neben der Einrichtung der zweiten Teilhülse 24 für eine Aufnahme von 16 mm - Rohren, welche eine gewisse Durchmessertoleranz aufweisen, einen Fluss eines zwischen einer Stützhülse 12 und dem Rohr austretenden Fluids zwischen der zweiten 24 Teilhülse und dem Rohr, wodurch eine Leckage bei einer Dichtigkeitsprüfung der Verbindung des Rohres mit der Stützhülse 12 besonders deutlich sichtbar wird.

In der ersten Ausführungsform ist die Abschnittsverdickung durch einen einfachen Umschlag eines Materials der ersten Teilhülse 22 ausgebildet. Die Abschnittsverdickung 20 kann jedoch auch durch Bördeln oder durch das Falzen mit einem weiteren Materialelement (nicht gezeigt) gebildet werden. Insbesondere kann ein Materialring, beispielsweise ein Metallring über ein Rohr gezogen werden, an dessen Axialende angeordnet werden, woraufhin an einem axialen Ende des Rohres ein Rand zu einem Falz über den Materialring umgeschlagen wird, wodurch der Materialring auf dem Rohr festgelegt wird und eine Abschnittsverdickung an einer ersten Teilhülse ausbilden, wenn die Teilhülse aus dem oben beschriebenen Rohr hergestellt wird.

Vorzugsweise ist die Abschnittsverdickung 20 an einem aufschubseitigen Axialende 50a der ersten Teilhülse 22 gebildet. Die Ausbuchtung 28 kann an dem bundseitigen Axialende 50b der ersten Teilhülse 22 ausgebildet sein. Die Presshülse 14 weist ein aufschubseitiges Axialende 52a und ein bundseitiges Axialende 52b auf, wobei die Abschnittsverdickung 20 jeweils von diesen Axialenden 52a, 52b der Presshülse 14 in einem Abstand angeordnet sein kann, und wobei die Abschnittsverdickung 20 vorzugsweise den Mittelpunkt zwischen diesen Axialenden 52a, 52b der Presshülse 14 überspannt.

Die Presshülse 14 kann zusammen mit dem Kunststoffring 26 eine Presshülsenanordnung darstellen, wobei der Kunststoffring 26 die Funktion eines Montagerings, welcher von der Presshülse separat ist, übernimmt. Der Kunststoffring 26 (Montagering) kann mehrteilig ausgebildet sein. Er kann beispielsweise einen ersten Verrastungskörper 26a aufweisen. In der Presshülsenanordnung kann die Auskragung 40 von einer Nase oder einer umfänglichen Auskragung 28k des Verrastungskörpers 26a zurückgehalten werden. Die Ausbuchtung 28 kann mit der Nase oder Auskragung 26k derart zusammenwirken, dass die erste Teilhülse 22 in den Verrastungskörper 26a einrastet. Der Verrastungskörper 26a kann bezüglich eines Zentralkörpers 26c des Kunststoffrings 26, beispielsweise durch Verrasten, festgelegt sein. Ferner kann der Kunststoffring 26 eine Verrastungsanordnung 26b aufweisen, welche dazu eingerichtet ist, mit der Halteeinrichtung 32 zusammenzuwirken, beispielsweise in der Nut 34 zu verrasten.

### Zweite Ausführungsform

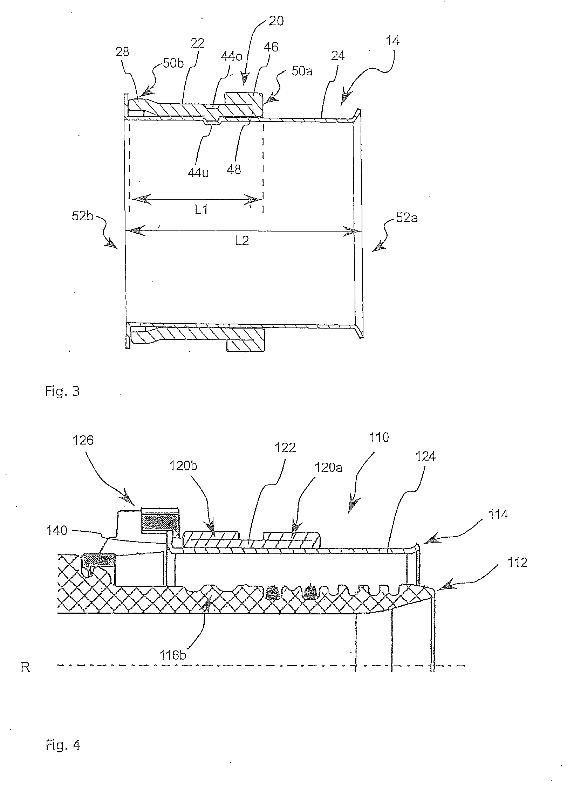

Figur 4 zeigt einen Ausschnitt eines Fittings 110 einer zweiten Ausführungsform der vorliegenden Erfindung mit einer Stützhülse 112 und einer Presshülse 114. Die Darstellung der Figur 4 zeigt die obere Hälfte einer Querschnittsansicht des Fittings 110, wobei der Fitting 110 bezüglich der Rotationsachse R im Wesentlichen (beispielsweise mit Ausnahme von Vertiefungen analog den Vertiefungen 44o, 44u zum Festlegen von Teilhülsen) rotationssymmetrisch aufgebaut ist.

Im Folgenden wird nur auf die Unterschiede zwischen der ersten und zweiten Ausführungsform eingegangen. Die zweite Ausführungsform der Erfindung unterscheidet sich von der ersten Ausführungsform der Erfindung, wie in Fig. 4 gezeigt, dadurch, dass die erste Teilhülse 122 neben der Abschnittsverdickung 120a eine zweite Abschnittsverdickung 120b aufweist, welche vorzugsweise oberhalb einer bundseitigen Vorsprungsstruktur 116b angeordnet ist. Es ist jedoch auch möglich, dass die Abschnittsverdickung 120a und/oder die zweite Abschnittsverdickung 120b einem oder jeweils einem O-Ring zugeordnet ist.

In der zweiten Ausführungsform weist eine zweite Teilhülse 124 vorzugsweise eine Auskragung 140 auf, mittels welcher die Presshülse 114 an dem Kunststoffring 126 befestigt werden kann.

Vorzugsweise ist auch in der zweiten Ausführungsform die erste Teilhülse 122 gegenüber der zweiten Teilhülse 124 festgelegt.

### Dritte Ausführungsform

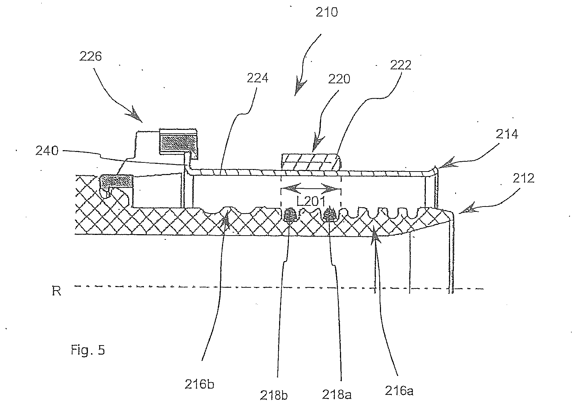

Figur 5 zeigt einen Ausschnitt einer Querschnittsansicht eines Fittings 210 einer dritten Ausführungsform der vorliegenden Erfindung mit einer Stützhülse 212 und einer Presshülse 214. Diese Anordnung ist, ebenso wie die Anordnung der zweiten Ausführungsform bezüglich einer Rotationsachse R, im Wesentlichen rotationssymmetrisch.

Im Folgenden wird nur auf die Unterschiede der dritten Ausführungsform, welche in Fig. 5 gezeigt ist, zur ersten Ausführungsform eingegangen. In der dritten Ausführungsform ist die Abschnittsverdickung 220 über die gesamte axiale Erstreckung L201 ersten Teilhülse 222 ausgebildet. Die Abschnittsverdickung 220 kann durch einen einfachen Umschlag oder ähnliches ausgebildet sein. Insbesondere soll im Rahmen dieser Anmeldung auch unter einer Abschnittsverdickung der ersten Teilhülse 222 ein durchgehender Materialring, beispielsweise einen Metallring, mit einer ausreichend großen Materialstärke verstanden werden.

Ferner kann die erste Teilhülse 222 sich über einen der oder auch beide O-Ringe 218a, 218b erstrecken. Es ist ferner möglich, dass die Teilhülsen 222 sich oberhalb der aufschubseitigen 216a und/oder bundseitigen 216b Vorsprungsstruktur erstrecken. Vorzugsweise ist die erste Teilhülse 222 gegenüber der zweiten Teilhülse 224 festgelegt. Die Presshülse 214 kann gegenüber einem Kunststoffring 226 unter Zuhilfenahme einer Auskragung 240, vorzugsweise der zweiten Teilhülse 224 gehalten werden.

### Vierte Ausführungsform

Im Folgenden wird eine besonders bevorzugte Ausführungsform der vorliegenden Erfindung beschrieben, welche auf der dritten Ausführungsform aufbaut, wobei nur eine Presshülse 314 beschrieben wird. Ebenso wie in der dritten Ausführungsform wird die Presshülse der vierten Ausführungsform an einer Stützhülse, z.B. der ersten Ausführungsform, angeordnet werden, um einen erfindungsgemäßen Fitting bereitzustellen, wobei hierzu Mittel der ersten Ausführungsform verwendet werden können.

Aus diesem Grund werden im Folgenden nur die Unterschiede zwischen der Presshülse 314 der vierten Ausführungsform und der Presshülse 14 der ersten Ausführungsform beschrieben (die Presshülse 214 der dritten Ausführungsform baut auf der Presshülse 14 der ersten Ausführungsform auf).

In der vierten Ausführungsform ist eine Abschnittsverdickung 320 über eine gesamte axiale Erstreckung L301 einer ersten Teilhülse 322 ausgebildet. Die erste Teilhülse 322 kann aus einem Kunststoff gefertigt sein, wobei insbesondere als Kunststoff POM (Polyoxymethylen), PA6 (Polyamid 6), PP (Polypropylen) und ABS (Acrylnitril-Butadien-Styrol-Copolymerisat) verwendet werden können. POM hat sich als besonders geeignet erwiesen, da beim dem Verpressen der Presshülse im Wesentlichen kein Grat an dem Kunststoff entsteht. Eine Gesamtmaterialstärke der ersten Teilhülse 322 kann größer sein als eine Gesamtmaterialstärke einer zweiten Teilhülse 324.

Die aus Kunststoff gefertigte Teilhülse 322 kann besonders kostengünstig durch ein Anspritzen an der zweiten Teilhülse 324 angebracht werden, welche im Wesentlichen der zweiten Teilhülse 24 entsprechen kann. Die zweite Teilhülse 324 kann, abgesehen von optionalen Einführungshilfen/ Erweiterung 342 an einem aufschubseitigen Axialende 352a und/oder optionalen Ausbuchtungen 328 an einem bundseitigen Axialende 350b zum Halten der Presshülse 314 an einem Kunststoffring und/oder optionalen Durchgangslöchern zur Sichtprüfung bzw. einem Ausbilden einer Leckage, im Wesentlichen glatt ausgebildet werden. Zu beachten ist, dass ein verpresstes Rohr durch die Steifigkeit der zweiten Teilhülse 324 in Form gehalten werden kann, so dass die erste Teilhülse 322 nur für den Verpressvorgang benötigt wird. Dies verhindert einen Einfluss von bei Kunststoff möglicherweise auftretenden Kriecheffekten auf die Haltbarkeit der Verbindung des Rohrs an einer Stützhülse.

Die zweite Teilhülse 322 kann am Übergang einer radialen Außenfläche 322a zu axialen Seitenflächen 322b, 322c mindestens eine abgestumpfte Kantenstruktur 354a, 354b (vorzugsweise zwei derartige Strukturen) aufweisen. Eine derartige abgestumpfte Kantenstruktur 354a bzw. 354b verhindert vorzugsweise ein Verklemmen der zweiten Teilhülse 322 an dem Presswerkzeug während des Pressvorgangs. Unter einer abgestumpften Kantenstruktur soll insbesondere ein als eine Abrundung ausgebildeter Übergang der radialen Außenfläche 322a zu einer der axialen Seitenflächen 322b oder 322c verstanden werden, wobei die Abrundung einen wohldefinierten Radius aufweisen kann, welcher im Bereich von 0,5 mm liegen kann. Ebenso ist es möglich, unter einer abgestumpften Kantenstruktur einen durch eine Zwischenfläche zwischen der radialen Außenseite 322a und der axialen Seitenflächen 322b oder 322c ausgebildeten Übergang zu verstehen, wobei die Zwischenfläche vorzugsweise einen stumpfen Winkel, insbesondere von in etwa 135°, mit der radialen Außenfläche 322a und/oder der jeweiligen axialen Seitenfläche 322b oder 322c einschließt.

Es wird bevorzugt, die erste Teilhülse 322 nicht an einem glatten Flächenabschnitt der zweiten Teilhülse 324 vorzusehen sondern an einem Abschnitt, welcher eine Vertiefung 356 aufweist. Die Vertiefung 356 kann als ein Durchgangsloch, oder als eine Vertiefung, welche durch Ausfräsen, Ausstanzen, Eindrücken, Tiefziehen, oder ähnliches geformt wird, ausgebildet sein. In diesem Fall kann das Kunststoffmaterial der ersten Teilhülse 322 in die Vertiefung 356 eingreifen und somit die erste Teilhülse 322 in einer Axialrichtung der Stützhülse 314 festlegen. Das Eingreifen des Kunststoffmaterials der ersten Teilhülse 322 kann insbesondere während des Anspritzvorgangs der ersten Teilhülse 322 an der zweiten Teilhülse 324 in die Vertiefung 356 gelangen. Eine Festlegung der ersten Teilhülse 322 gegenüber der zweiten Teilhülse 324 kann auch durch eine Adhäsion des Kunststoffmaterials der ersten Teilhülse 322 an der zweiten Teilhülse 324 ausgebildet sein.

In einer besonders bevorzugten Weiterbildung kann die erste Teilhülse 322 eine Sollbruchstelle aufweisen, sodass beim Verpressen der Stützhülse 314 die erste Teilhülse 322 brechen und sich von der zweiten Teilhülse 324 lösen kann. Das Lösen der Teilhülse 322 kann als Indikator für eine vollständige Verpressung der Stützhülse 314 dienen.

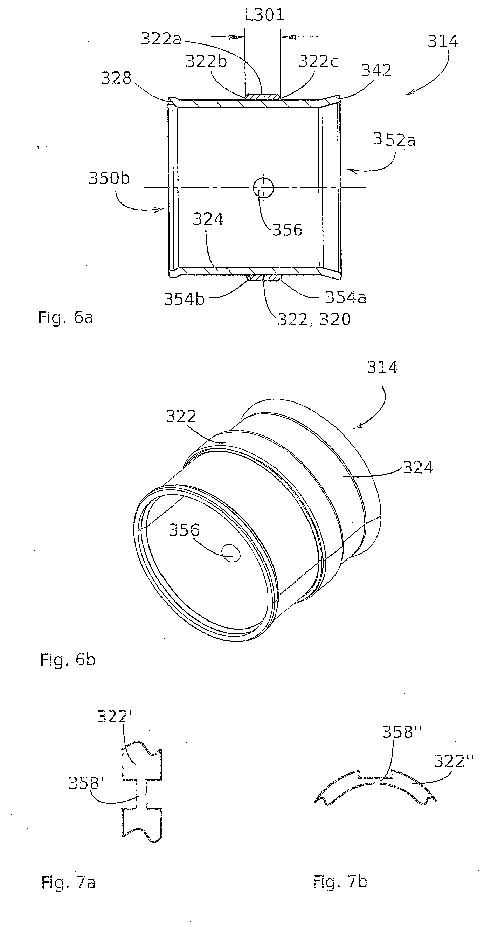

Wie in Figur 7a gezeigt, kann/können in einer alternativen Ausführungsform der ersten Teilhülse der vierten Ausführungsform eine oder mehrere Ausnehmungen derart in Axialrichtung der ersten Teilhülse 322' vorgesehen sein, dass ein schmaler Steg 358' übrig bleibt, welcher als die oben beschriebene Sollbruchstelle dienen kann. Beim Verpressen der Stützhülse 314 wird die erste Teilhülse 322' in Radialrichtung zusammengepresst und der Steg 358' bricht vorzugsweise beim Verpressen.

Ebenso kann die Sollbruchstelle in einer weiteren alternativen Ausführungsform der ersten Teilhülse 322" durch eine oder mehrere Materialausnehmung in Radialrichtung der Teilhülse 322" ausgebildet werden, sodass ein schmaler Steg 358" übrig bleibt, welcher als die oben beschriebene Sollbruchstelle dienen kann.

Es ist zu beachten, dass die erste Teilhülse 322 aus, vorzugsweise unterschiedlichen, Kunststoffschichten ausgebildet sein kann und ebenso wie die Teilhülse 122 eine Mehrzahl von Abschnittsverdickungen aufweisen kann. Die erste Teilhülse 322 ist auf einer radialen Außenfläche der zweiten Teilhülse 324 angeordnet, entsprechendes gilt vorzugsweise für alle ersten und zweiten Teilhülsen der Erfindung.

In allen vier Ausführungsformen der vorliegenden Erfindung kann die zweite Teilhülse 24, 124, 224, 324 der Führung eines Presswerkzeugs dienen. Ebenso kann die Abschnittsverdickung 20, 120, 220, 320 aller vier Ausführungsformen dafür eingerichtet sein, einer Kontur eines Presswerkzeugs (Presskontur) zu entsprechen. Bei den Kunststoffringen 126 und 226 kann es sich jeweils auch um den Montagering des erfindungsgemäßen Fittings handeln.

Die Fittinge 10, 110 und 210 gemäß Ausführungsformen der vorliegenden Erfindung umfassen Presshülsen 14, 114, 214, 314, welche als Aspekte des erfindungsgemäßen Fittings zu betrachten sind. Im Rahmen dieser Anmeldung kann, wie beispielsweise in Fig. 3 zu sehen, die von der zweiten Teilhülse 24 separat ausgebildete erste Teilhülse 22 gegenüber der zweiten Teilhülse 24 festgelegt werden. Es soll jedoch im Rahmen dieser Anmeldung auch optional möglich sein, gegeneinander festgelegte separate Teilhülsen der Presshülse als nicht im Widerspruch stehend zu einer separaten Ausbildung dieser Teilhülsen, insbesondere zu einer separaten Ausbildung der ersten Teilhülse und der zweiten Teilhülse, anzusehen. Optional können separat ausgebildete Teilhülsen im Rahmen dieser Anmeldung insbesondere durch einen Kraftschluss und/oder einen Formschluss und/oder durch ein Verbindungsmittel (z. B. einen Kleber) miteinander wechselwirken.

## Patentansprüche

1. Fitting, umfassend eine Presshülse (14; 114; 214; 314) zum Festlegen eines Rohres auf einer Stützhülse (12; 112; 212) durch eine Pressverbindung, die Presshülse (14; 114; 214; 314) umfassend:
eine erste Teilhülse (22; 122; 222; 322), welche entlang der axialen Richtung der Presshülse (14; 114; 214; 314) eine Abschnittsverdickung (20; 120a, 120b; 220; 320) der Presshülse (14; 114; 214; 314) ausbildet, und
eine zweite Teilhülse (24; 124; 224; 324), in welcher das Rohr aufzunehmen ist, wobei
die erste Teilhülse (22; 122; 222; 322) auf der zweiten Teilhülse (24; 124; 224; 324) aufgenommen ist,
wobei der Fitting weiter die Stützhülse (12; 112; 212) umfasst, wobei die Presshülse (14; 114; 214; 314) gegenüber der Stützhülse (12; 112; 212) eine vorbestimmte Position einnimmt,
wobei der Fitting ferner einen an der Stützhülse (12; 112; 212) angebrachten O-Ring (18a, 18b; 218a, 218b) umfasst, wobei der Bereich der Abschnittsverdickung (20; 120b; 220; 320) den O-Ring (18a, 18b; 218a, 218b) überspannt,
wobei der Fitting einen von der Presshülse (14; 114; 214; 314) separaten Montagering (26; 126; 226) für die Presshülse (14; 114; 214; 314) umfasst.

2. Fitting nach Anspruch 1, ferner umfassend eine an der Stützhülse (12; 112; 212) vorgesehene Struktur, innerhalb welcher sich die radiale Ausdehnung der Stützhülse (12; 112; 212) ändert, umfassend beispielsweise mindestens eine Rippe oder mindestens eine Nut,
wobei die Struktur durch einen Bereich der Abschnittsverdickung (20; 120a, 120b; 220) überspannt wird, oder
wobei die Struktur von einem Teilbereich der Presshülse (14) außerhalb des Bereichs der Abschnittsverdickung (20) überspannt wird, wobei in dem Teilbereich die erste Teilhülse (22) die zweite Teilhülse (24) zumindest abschnittsweise überlagert.

3. Fitting nach Anspruch 1 oder 2, wobei die Abschnittsverdickung (20; 120a, 120b; 220) jeweils in einem Abstand von axialen Enden (52a, 52b) der Presshülse (14; 114; 214) angeordnet ist.

4. Fitting nach einem der vorhergehenden Ansprüche, wobei die Abschnittsverdickung (20; 120a, 120b; 220) eine Schichtstruktur, insbesondere eine Materialfaltung und/oder eine Materialaufrollung aufweist.

5. Fitting nach einem der vorhergehenden Ansprüche, wobei mindestens ein Abschnitt der Abschnittsverdickung (20; 120a, 120b; 220) zusammenhängend mit dem Material der ersten Teilhülse (22; 122; 222) außerhalb der Abschnittsverdickung (20; 120a, 120b; 220) ausgebildet ist.

6. Fitting nach einem der vorhergehenden Ansprüche, wobei die Abschnittsverdickung (20; 120a, 120b; 220; 320) an einem ersten axialen Ende (50a) der ersten Teilhülse (22; 122; 222; 322) ausgebildet ist.

7. Fitting nach einem der vorhergehenden Ansprüche, wobei die erste Teilhülse (22; 122) und die zweite Teilhülse (24; 124) sich zumindest abschnittsweise außerhalb des Bereichs der Abschnittsverdickung (20; 120a, 120b) überlagern.

8. Fitting nach einem der vorhergehenden Ansprüche, wobei die erste Teilhülse (22; 122; 222) an einem zweiten axialen Ende (50b) eine Änderung (28) Ihrer Radialausdehnung aufweist, um die Presshülse (14; 114; 214) an dem von der Presshülse (14; 114; 214) separaten Montagering (26; 126; 226) zu befestigen.

9. Fitting nach einem der vorhergehenden Ansprüche, wobei die Abschnittsverdickung (20; 120a, 120b; 220; 320) dafür eingerichtet ist, zumindest abschnittsweise der Kontur einer Pressbacke eines Presswerkzeugs zu entsprechen.

10. Fitting nach einem der vorhergehenden Ansprüche, wobei die erste Teilhülse (122) eine zweite Abschnittsverdickung (120b) aufweist,
wobei in einem Bereich der zweiten Abschnittsverdickung (120b) die erste Teilhülse (122) die zweite Teilhülse (124) überlagert.

11. Fitting nach einem der vorhergehenden Ansprüche, wobei die erste Teilhülse (22; 122; 222; 322) und die zweite Teilhülse (24; 124; 224; 324) relativ zueinander festgelegt sind.

12. Fitting nach einem der vorhergehenden Ansprüche, wobei eine Materialstärke der ersten Teilhülse (22; 122; 222; 322) größer als eine Materialstärke der zweiten Teilhülse (24; 124; 224; 324) ist.

13. Fitting nach einem der vorhergehenden Ansprüche, wobei eine axiale Ausdehnung (L1) der ersten Teilhülse (22; 122; 222; 322) kleiner als eine axiale Ausdehnung (L2) der zweiten Teilhülse (24; 124; 224; 324) ist.

14. Fitting nach einem der vorhergehenden Ansprüche, wobei die erste Teilhülse (322) Kunststoff enthält, vorzugsweise aus Kunststoff ausgebildet ist.

15. Fitting nach einem der vorhergehenden Ansprüche, wobei die erste Teilhülse (322) mindestens eine abgestumpfte Kantenstruktur (354a, 354b) aufweist.

16. Fitting nach Anspruch 11 oder Anspruch 11 und einem der Ansprüche 12 bis 15, wobei die erste Teilhülse (322) an der zweiten Teilhülse (324) angespritzt ist und vorzugsweise angespritztes Material der ersten Teilhülse vorzugsweise in eine Vertiefung (356) der zweiten Teilhülse (324) eingreift.

17. Fitting nach einem der vorhergehenden Ansprüche, wobei die erste Teilhülse (322) eine Sollbruchstelle (358'; 358") aufweist.

## Claims

1. Fitting comprising a press sleeve (14; 114; 214; 314) for securing a pipe on a support sleeve (12; 112; 212) by means of a press connection, the press sleeve (14; 114; 214; 314) comprising:
a first partial sleeve (22; 122; 222; 322) that forms a local bulging (20; 120a, 120b; 220, 320) of the press sleeve (14; 114: 214; 314) in the axial direction of the press sleeve (14; 114: 214; 314), and
a second partial sleeve (24; 124; 224; 324) in which the pipe can be received, wherein the first partial sleeve (22; 122; 222; 322) is received on the second partial sleeve (24; 124; 224; 324),
wherein the fitting further comprises the support sleeve (12; 112; 212), wherein the press sleeve (14; 114; 214; 314) occupies a predetermined position relative to the support sleeve (12; 112; 212),
wherein the fitting further comprises an O-ring (18a, 18b; 218a, 218b) attached to the support sleeve (12; 112; 212), wherein the region of the local bulging (20; 120b; 220; 320) spans said O-ring (18a, 18b; 218a, 218b),
wherein the fitting comprises a mounting ring (26; 126; 226) for the press sleeve (14; 114; 214; 314) that is separate from the press sleeve (14; 114; 214; 314).

2. Fitting according to claim 1, further comprising a structure provided on the support sleeve (12; 112; 212) inside which the radial extension of the support sleeve (12; 112; 212) changes, comprising, for example, at least one ridge or at least one groove,
wherein the structure is spanned by a region of the local bulging (20; 120a, 120b; 220), or wherein the structure is spanned by a portion of the press sleeve (14) outside of the region of the local bulging (20),
wherein the first partial sleeve (22) overlaps the second partial sleeve (24) at least in part in said portion.

3. Fitting according to either claim 1 or claim 2, wherein the local bulging (20; 120a, 120b; 220) is in each case arranged at a distance from axial ends (52a, 52b) of the press sleeve (14; 114; 214).

4. Fitting according to any of the preceding claims, wherein the local bulging (20; 120a, 120b; 220) has a layered structure, in particular folded and/or rolled-up material.

5. Fitting according to any of the preceding claims, wherein at least one portion of the local bulging (20; 120a, 120b; 220) is integrally formed with the material of the first partial sleeve (22; 122; 222) outside of the local bulging (20; 120a, 120b; 220).

6. Fitting according to any of the preceding claims, wherein the local bulging (20; 120a, 120b; 220, 320) is formed on a first axial end (50a) of the first partial sleeve (22; 122; 222; 322).

7. Fitting according to any of the preceding claims, wherein the first partial sleeve (22; 122) and the second partial sleeve (24; 124) overlap one another at least in part outside of the region of the local bulging (20; 120a, 120b).

8. Fitting according to any of the preceding claims, wherein the first partial sleeve (22; 122; 222) comprises a change (28) in the radial extension thereof on a second axial end (50b) in order to fasten the press sleeve (14; 114; 214) on the mounting ring (26; 126; 226), which is separate from the press sleeve (14; 114; 214).

9. Fitting according to any of the preceding claims, wherein the local bulging (20; 120a, 120b; 220; 320) is designed to correspond at least in part to the contour of a press jaw of a pressing tool.

10. Fitting according to any of the preceding claims, wherein the first partial sleeve (122) comprises a second local bulging (120b),
wherein the first partial sleeve (122) overlaps the second partial sleeve (124) in the region of the second local bulging (120b).

11. Fitting according to any of the preceding claims, wherein the first partial sleeve (22; 122; 222; 322) and the second partial sleeve (24; 124; 224; 324) are secured relative to one another.

12. Fitting according to any of the preceding claims, wherein a material thickness of the first partial sleeve (22; 122; 222; 322) is greater than a material thickness of the second partial sleeve (24; 124; 224; 324).

13. Fitting according to any of the preceding claims, wherein an axial extension (L1) of the first partial sleeve (22; 122; 222; 322) is smaller than an axial extension (L2) of the second partial sleeve (24; 124; 224; 324).

14. Fitting according to any of the preceding claims, wherein the first partial sleeve (322) contains plastics material, and is preferably made of plastics material.

15. Fitting according to any of the preceding claims, wherein the first partial sleeve (322) comprises at least one truncated-edge structure (354a, 354b).

16. Fitting according to either claim 11 or claim 11 and any of claims 12 to 15, wherein the first partial sleeve (322) is inject-moulded on the second partial sleeve (324) and preferably injection-moulded material of the first partial sleeve preferably engages in a recess (356) in the second partial sleeve (324).

17. Fitting according to any of the preceding claims, wherein the first partial sleeve (322) comprises a predetermined breaking point (358'; 358").

## Revendications

1. Raccord, comprenant un manchon à sertir (14 ; 114 ; 214 ; 314) pour la fixation d'un tube sur un manchon d'appui (12 ; 112 ; 212) au moyen d'un assemblage serti, le manchon à sertir (14 ; 114 ; 214 ; 314) comprenant :
une première partie de manchon (22 ; 122 ; 222 ; 322), laquelle constitue le long de la direction axiale du manchon à sertir (14 ; 114 ; 214 ; 314) un épaississement de section (20 ; 120a, 120b ; 220 ; 320) du manchon à sertir (14 ; 114 ; 214 ; 314), et
une deuxième partie de manchon (24 ; 124 ; 224 ; 324), dans laquelle le tube doit être reçu, dans lequel la première partie de manchon (22 ; 122 ; 222 ; 322) est reçue sur la deuxième partie de manchon (24 ; 124 ; 224 ; 324),
dans lequel le raccord comporte en outre le manchon d'appui (12 ; 112 ; 212), dans lequel le manchon à sertir (14 ; 114 ; 214 ; 314) occupe par rapport au manchon d'appui (12 ; 112 ; 212) une position prédéfinie,
dans lequel le raccord comporte en outre un joint torique (18a, 18b ; 218a, 218b) monté sur le manchon d'appui (12 ; 112 ; 212), dans lequel la zone de l'épaississement de section (20 ; 120b ; 220 ; 320) recouvre le joint torique (18a, 18b ; 218a, 218b),
dans lequel le raccord comporte une bague de montage (26 ; 126 ; 226) séparée du manchon à sertir (14 ; 114 ; 214 ; 314) pour le manchon à sertir (14 ; 114 ; 214 ; 314).

2. Raccord selon la revendication 1, comprenant en outre une structure prévue sur le manchon d'appui (12 ; 112 ; 212) et à l'intérieur de laquelle l'étendue radiale du manchon d'appui (12 ; 112 ; 212) varie, comprenant par exemple au moins une nervure ou au moins une rainure,
dans lequel la structure est recouverte par une zone de l'épaississement de section (20 ; 120a, 120b ; 220), ou
dans lequel la structure est recouverte par une zone partielle du manchon à sertir (14) à l'extérieur de la zone de l'épaississement de section (20), dans lequel la première partie de manchon (22) chevauche au moins en partie la deuxième partie de manchon (24) dans la zone partielle.

3. Raccord selon la revendication 1 ou 2, dans lequel l'épaississement de section (20 ; 120a, 120b ; 220) est agencé à distance de chacune des extrémités axiales (52a, 52b) du manchon à sertir (14 ; 114 ; 214) .

4. Raccord selon l'une quelconque des revendications précédentes, dans lequel l'épaississement de section (20 ; 120a, 120b ; 220) présente une structure stratifiée, en particulier un pliage de matériau et/ou un enroulement de matériau.

5. Raccord selon l'une quelconque des revendications précédentes, dans lequel au moins une section de l'épaississement de section (20 ; 120a, 120b ; 220) est formée d'une seule pièce avec le matériau de la première partie de manchon (22 ; 122 ; 222) à l'extérieur de l'épaississement de section (20 ; 120a, 120b ; 220).

6. Raccord selon l'une quelconque des revendications précédentes, dans lequel l'épaississement de section (20 ; 120a, 120b ; 220 ; 320) est formé sur une première extrémité axiale (50a) de la première partie de manchon (22 ; 122 ; 222 ; 322) .

7. Raccord selon l'une quelconque des revendications précédentes, dans lequel la première partie de manchon (22 ; 122) et la deuxième partie de manchon (24 ; 124) se chevauchent au moins en partie à l'extérieur de la zone de l'épaississement de section (20 ; 120a, 120b).

8. Raccord selon l'une quelconque des revendications précédentes, dans lequel la première partie de manchon (22 ; 122 ; 222) présente à une deuxième extrémité axiale (50b) une modification (28) de son étendue radiale, afin de fixer le manchon à sertir (14 ; 114 ; 214) sur la bague de montage (26 ; 126 ; 226) séparée du manchon à sertir (14 ; 114 ; 214) .

9. Raccord selon l'une quelconque des revendications précédentes, dans lequel l'épaississement de section (20 ; 120a, 120b ; 220 ; 320) est conçu pour correspondre au moins en partie au contour d'une mâchoire de sertissage d'un outil de sertissage.

10. Raccord selon l'une quelconque des revendications précédentes, dans lequel la première partie de manchon (122) présente un deuxième épaississement de section (120b),
dans lequel la première partie de manchon (122) chevauche la deuxième partie de manchon (124) dans une zone du deuxième épaississement de section (120b).

11. Raccord selon l'une quelconque des revendications précédentes, dans lequel la première partie de manchon (22 ; 122 ; 222 ; 322) et la deuxième partie de manchon (24 ; 124 ; 224 ; 324) sont fixées l'une par rapport à l'autre.

12. Raccord selon l'une quelconque des revendications précédentes, dans lequel une épaisseur de matériau de la première partie de manchon (22 ; 122 ; 222 ; 322) est supérieure à une épaisseur de matériau de la deuxième partie de manchon (24 ; 124 ; 224 ; 324).

13. Raccord selon l'une quelconque des revendications précédentes, dans lequel une étendue axiale (L1) de la première partie de manchon (22 ; 122 ; 222 ; 322) est inférieure à une étendue axiale (L2) de la deuxième partie de manchon (24 ; 124 ; 224 ; 324) .

14. Raccord selon l'une quelconque des revendications précédentes, dans lequel la première partie de manchon (322) contient de la matière plastique, est de préférence réalisée en matière plastique.

15. Raccord selon l'une quelconque des revendications précédentes, dans lequel la première partie de manchon (322) présente au moins une structure de bord arrondi (354a, 354b).

16. Raccord selon la revendication 11 ou selon la revendication 11 et l'une des revendications 12 à 15, dans lequel la première partie de manchon (322) est moulée par injection sur la deuxième partie de manchon (324) et le matériau de préférence moulé par injection de la première partie de manchon s'insère de préférence dans un creux (356) de la deuxième partie de manchon (324) .

17. Raccord selon l'une quelconque des revendications précédentes, dans lequel la première partie de manchon (322) présente un point de rupture (358' ; 358'').
